(19) Europäisches Patentamt / European Patent Office / Office européen des brevets

(11) **EP 1 684 210 B1**

## (12) FASCICULE DE BREVET EUROPEEN

(45) Date de publication et mention
de la délivrance du brevet:
**26.08.2009 Bulletin 2009/35**

(51) Int Cl.:
***G06K 9/00*** (2006.01)

(21) Numéro de dépôt: **06300026.9**

(22) Date de dépôt: **12.01.2006**

(54) **Procédé pour détecter des yeux rouges basé sur détection d'une zone de peau**

Rote-Augen-Erkennung beruhend auf Erkennung von Hautzonen

Red-eye detection based on skin region detection

(84) Etats contractants désignés:
**DE ES GB IT**

(30) Priorité: **20.01.2005 FR 0550181**

(43) Date de publication de la demande:
**26.07.2006 Bulletin 2006/30**

(73) Titulaire: **SAGEM COMMUNICATIONS SAS**
**75015 Paris (FR)**

(72) Inventeurs:
• **Touboul, Jonathan**
**06200 Nice (FR)**
• **Sabatier, Pierre**
**95800 Cergy Saint-Christophe (FR)**

(74) Mandataire: **Camus, Olivier Jean-Claude**
**SCHMIT CHRETIEN**
**8, place du Ponceau**
**95000 Cergy (FR)**

(56) Documents cités:
**EP-A- 0 635 972**      **EP-A- 0 899 680**
**EP-A- 1 271 394**      **US-A1- 2002 136 450**
**US-A1- 2004 114 829**   **US-B1- 6 728 401**

• SMOLKA B ET AL: "Towards automatic redeye effect removal" PATTERN RECOGNITION LETTERS, NORTH-HOLLAND PUBL. AMSTERDAM, NL, vol. 24, no. 11, juillet 2003 (2003-07), pages 1767-1785, XP004416063 ISSN: 0167-8655
• SOBOTTKA K ET AL: "Face localization and facial feature extraction based on shape and color information" PROCEEDINGS OF THE INTERNATIONAL CONFERENCE ON IMAGE PROCESSING (ICIP) LAUSANNE, SEPT. 16 - 19, 1996, NEW YORK, IEEE, US, vol. VOL. 1, 16 septembre 1996 (1996-09-16), pages 483-486, XP010202436 ISBN: 0-7803-3259-8

## Description

*Domaine de l'invention*

L'invention concerne un procédé pour détecter des yeux rouges sur une image et, éventuellement, corriger la couleur rouge des yeux par une couleur plus naturelle. L'invention concerne également un dispositif d'impression d'images permettant de mettre en oeuvre ce procédé.

L'invention trouve des applications dans le domaine de l'impression d'images numériques pour corriger la teinte rouge surprenante et peu naturelle de la pupille des yeux d'un personnage apparaissant sur une image.

*Etat de la technique*

Dans le domaine de la photographie, numérique ou argentique, la prise d'images peut nécessiter, lorsque l'environnement est sombre, l'utilisation d'un flash. Or, comme cela est connu, la lumière du flash se réfléchit sur la rétine de l'oeil ce qui entraîne souvent l'apparition d'une teinte rouge surprenante et peu naturelle à l'emplacement de la pupille de l'oeil. Ce phénomène bien connu est appelé artefact des yeux rouges.

Il existe actuellement des nombreux systèmes qui tentent d'éviter ce phénomène des yeux rouges. La plupart de ces systèmes agissent sur la lumière émise par le flash, lors de la prise d'image. D'autres systèmes tentent de corriger la couleur rouge de la pupille de l'oeil avant l'impression de l'image. Ces systèmes sont généralement installés sur des ordinateurs reliés à des dispositifs d'impression d'images. Certains systèmes sont installés directement sur le dispositif d'impression d'images ; on parle alors de systèmes embarqués.

Certains de ces systèmes mettent en oeuvre un procédé qui nécessite une sélection, par l'utilisateur, de la zone dans laquelle se trouvent les yeux rouges à corriger. Un tel procédé n'est pas automatique. Il nécessite une attention et une intervention de l'utilisateur.

D'autres systèmes mettent en oeuvre une méthode de reconnaissance de la tête, automatique et transparente pour l'utilisateur. Cette méthode est basée sur un apprentissage de la tête. Ces méthodes d'apprentissage consistent à faire apprendre au système un grand nombre de têtes qu'il est ensuite capable de reconnaître. Une fois constituée une base d'apprentissage contenant un grand nombre de têtes, de formes et de types variés, on en extrait des caractéristiques intéressantes comme, par exemple, les projections de ces images de têtes dans des espaces vectoriels, sur des bases spécifiques comme les bases d'ondelettes ou les bases de type Haar. A partir de la très grande quantité d'informations ainsi récupérée, on extrait les informations les plus critiques, les plus discriminantes, celles qui décrivent le mieux une tête. Ces données ayant été extraites de la base d'apprentissage, on crée un classificateur qui permet de détecter une tête dans l'image, à plusieurs échelles possibles. Ce classificateur calcule les fonctions (par exemple les projections sur les vecteurs de la base) choisies comme principales et spécifie si une tête a bien été détectée dans l'image à traiter. Un exemple d'une telle méthode d'apprentissage des têtes est décrite dans le document US 04-0119851-A1.

Avec une telle méthode qui reconnaît une tête dans sa globalité, il est nécessaire de parcourir l'image et de vérifier à toutes les échelles possibles la présence d'une tête. Une telle méthode est donc très coûteuse en temps de calcul et en mémoire pour le stockage des données extraites de la base d'apprentissage. Or, la capacité de calcul d'un dispositif embarqué et la mémoire disponible sont relativement réduites par rapport à celles d'un ordinateur. En conséquence, la mise en oeuvre d'une méthode de détection de tête par apprentissage, dans un système embarqué, entraîne un temps de traitement de l'image très long.

Il existe également des systèmes mettant en oeuvre une méthode d'apprentissage des yeux. L'apprentissage des yeux est réalisé de façon globale, comme l'apprentissage de têtes décrit précédemment. Cette méthode présente donc les mêmes inconvénients que la méthode d'apprentissage de têtes.

Une autre méthode pour détecter la présence de yeux rouges sur une image est décrite dans la demande de brevet CA-2460179. Cette méthode consiste à détecter, sur l'image, les pixels de rouge saturé. Plus précisément, ce procédé permet de détecter tous les pixels de l'image qui ont une forte saturation et une forte variation de luminance, dans un espace colorimétrique de type HSV (Hue : teinte, Saturation and Value/Lightness). Lorsque des pixels à forte saturation et forte variation de luminance sont détectés, le procédé en déduit qu'il s'agit d'un rouge saturé correspondant à des yeux rouges. Cependant, ce procédé présente l'inconvénient de détecter trop souvent des pixels rouges pouvant correspondre à une pupille d'oeil rouge. En effet, il existe, sur une image, de nombreux éléments pouvant être rouges, dans une couleur rouge saturée comme, par exemple, des lumières rouges, des vêtements rouges, une bouche, etc. Ce procédé détecte toutes ces zones rouges. De nombreux tests doivent ensuite être réalisés pour vérifier s'il s'agit d'un oeil ou non, ce qui entraîne de nombreux calculs. A défaut de ces tests, le procédé induit de nombreuses fausses détections et un temps de calcul pouvant être élevé pour des images contenant beaucoup de rouge.

En outre, le brevet européen EP 1394723 décrit un procédé de détection d'un oeil rouge sur une image comportant :

- détection d'une zone de peau sur l'image et, à partir de cette zone de peau, réalisation d'un masque de peau contenant ladite zone de peau,
- détection, dans ce masque de peau, de l'oeil rouge par détection d'une zone de rouge correspondant à la pupille de l'oeil et d'une zone de blanc correspondant au blanc de l'oeil.

*Exposé de l'invention*

L'invention a pour objet un procédé permettant de détecter un oeil ou plusieurs yeux rouges sur une image de façon complètement automatique et transparente pour l'utilisateur ; cette méthode nécessite relativement peu de calculs, ce qui lui permet d'être mise en oeuvre dans un dispositif d'impression d'images.

Le procédé de l'invention propose de détecter tout d'abord la présence d'une zone de peau sur l'image puis de détecter, dans cette zone de peau, la présence d'un oeil rouge, un oeil rouge comportant une zone de couleur rouge et une zone de couleur blanche d'un blanc propre à l'oeil.

Plus précisément, l'invention concerne un procédé de détection selon la revendication 1.

Le procédé de l'invention peut comporter également l'une quelconque des caractéristiques suivantes :

- la détection de l'oeil dans le masque est réalisée par comparaison d'une couleur de chaque pixel de l'image avec des couleurs de blanc et des couleurs de rouge mémorisées dans des tables colorimétriques.
- les tables colorimétriques sont des tables binaires ou des tables d'entiers où chaque entier représente une probabilité d'être une couleur de rouge ou de blanc d'oeil.
- une seconde table colorimétrique est obtenue par apprentissage des couleurs de blancs d'oeil.
- une seconde table colorimétrique est obtenue par détermination algébrique des couleurs de blancs d'oeil dans un espace colorimétrique RGB.
- une troisième table colorimétrique est obtenue par apprentissage des couleurs de rouge de l'oeil.
- une troisième table colorimétrique est obtenue par détermination algébrique des couleurs de rouge de l'oeil dans un espace colorimétrique RGB.
- la détection de l'oeil comporte une opération de reconnaissance d'une forme sensiblement ronde de la pupille de l'oeil.
- la détection de l'oeil comporte une détection d'une couleur constante entre la zone de rouge et la zone de blanc de l'oeil correspondant à l'iris de l'oeil.
- la détection de la zone de peau est réalisée par comparaison de chaque pixel de l'image avec des couleurs de peau mémorisées dans une première table colorimétrique.
- la première table colorimétrique est une table binaire ou une table d'entiers caractérisant une probabilité d'une couleur d'être une couleur de peau.
- la première table colorimétrique est réalisée par apprentissage des couleurs de peau.
- la détection de la zone de peau comporte un accroissement de la zone de peau par comparaison avec une quatrième table colorimétrique, cette quatrième table comportant un nombre de couleurs de peau plus grand que la troisième table.
- la zone de peau détectée est traitée par opérations morphologiques, pour former un masque de peau.
- la zone de peau détectée est traitée par opérations morphologiques, pour former un masque des trous de la peau.
- un oeil rouge détecté est corrigé par achromatisation et assombrissement des pixels formant la zone de rouge de l'oeil ou par récupération des informations non modifiées par l'effet des yeux rouges.
- la correction de l'oeil rouge comporte un lissage après dilatation des pixels de la zone de rouge.
  L'invention concerne également un dispositif d'impression d'image permettant de mettre en oeuvre un procédé de détection d'un oeil rouge tel que décrit précédemment.

*Brève description des dessins*

La figure 1 représente schématiquement une image d'un personnage comportant des yeux rouges, traitée selon le procédé de l'invention.

La figure 2 représente schématiquement le diagramme fonctionnel des différentes étapes du procédé de l'invention.

*Description détaillée de modes de réalisation de l'invention*

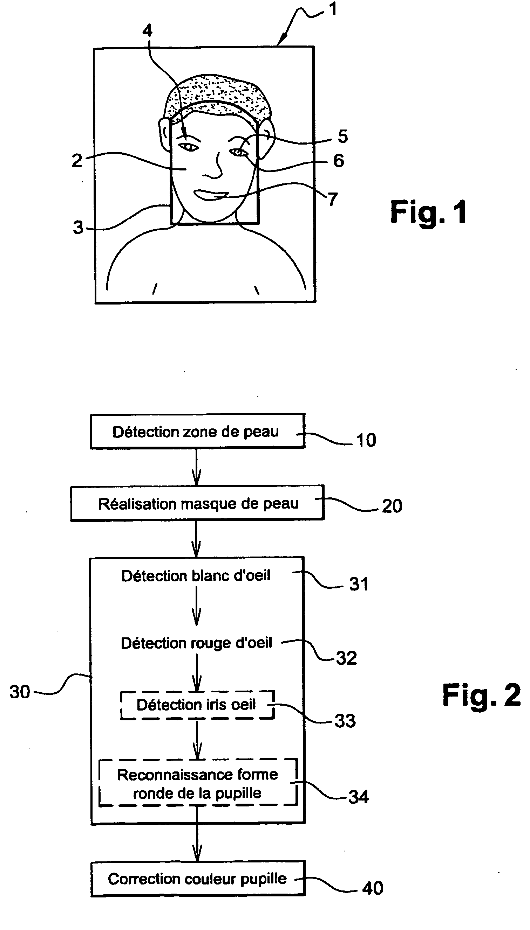

Le procédé de l'invention consiste à détecter la présence d'au moins un oeil rouge, sur une image à imprimer par détection de couleurs et de forme. La figure 1 représente schématiquement un personnage sur une image 1 à contrôler. Ce personnage comporte un visage avec deux yeux rouges 4. Comme on le verra plus en détail par la suite, le visage de ce personnage comporte une zone de peau 2 ; les yeux rouges de ce personnage sont situés dans cette zone de peau 2. Cette caractéristique des visages (yeux rouges situés dans la zone de peau) est utilisée, dans l'invention, pour détecter la présence d'un oeil rouge sur une image. Le procédé de l'invention propose d'utiliser cette caractéristique des visages pour déterminer la présence de yeux rouges sur l'image. Pour cela, le procédé de l'invention consiste à détecter l'existence d'une zone de peau sur l'image à contrôler puis l'existence d'au moins un oeil rouge, dans cette zone de peau. Les principales étapes du procédé de l'invention sont représentées sur la figure 2.

Selon le procédé de l'invention, la zone de peau est détectée par reconnaissance de la couleur de la peau. En effet, la couleur de la peau est une couleur variant entre un beige rosé et un marron caractéristiques. La première étape du procédé de l'invention représenté sur la figure 2 est donc la détection d'une zone de peau sur une image (10). Cette zone de peau est détectée par comparaison de chaque pixel avec des couleurs de peau mémorisées dans une table colorimétrique.

Pour cela, une table colorimétrique des couleurs de peau a été préalablement réalisée dans un espace colorimétrique tel que l'espace RGB (Rouge Vert Bleu). Différentes teintes ont été déterminée et mémorisées dans une table colorimétrique. Cette table colorimétrique peut être de type binaire. En d'autres termes, la table des couleurs de peau est une table contenant des 1 et des 0 correspondants, respectivement, à une couleur de peau et à une couleur de non-peau. Cette table des couleurs de peau peut être réalisée par un apprentissage des teintes de peau possibles. Pour cela, on constitue une base d'apprentissage au moyen d'un certain nombre d'échantillons de couleurs pouvant être rencontrés sur une image. Ces différents échantillons de couleurs sont placés dans un espace à plusieurs dimensions (par exemple 18) et séparés, dans cet espace, en couleurs de peau et couleurs de non-peau. L'apprentissage et la classification se font par une méthode dite SVM (Machines à Vecteur de Support) avec un noyau exponentiel : dans l'espace des caractéristiques des couleurs à plusieurs dimensions (par exemple 18), les distances entre un point x et y sont calculées à partir du pseudo produit scalaire : $<x, y> = \exp(-\|x-y\|^2/(2\sigma^2))$ où $\|x\|^2 = \Sigma\ x_i^2$ si $x = (x1 ... xn)$ est le vecteur de caractéristiques des couleurs. C'est le noyau gaussien radial, ou Radial Basis Function, d'écart type $\sigma$. L'écart type agit sur l'influence de l'ensemble d'apprentissage sur le modèle : Plus il est faible, plus on dépend de l'ensemble d'apprentissage et le classificateur se généralisera moins bien. La méthode SVM trouve alors la droite qui optimise la séparation des zones de peau et de non peau, dans l'espace muni du produit scalaire défini ci-dessus. Elle aboutit à la détermination d'un certain nombre de vecteurs de support $x_i$, et de coefficients (des multiplicateurs de Lagranges) $a_i$ et le biais du modèle noté b. Le classificateur sera alors de la forme : $f(x) = \Sigma(a_i<x, x_j>) + b$. Ainsi une couleur donnée, de caractéristiques x, sera considérée comme une couleur de peau si $f(x) >= 0$..

Une autre table de peau peut être constituée de façon paramétrique. Pour cela, toutes les couleurs de peau utilisées pour les apprentissages sont classées et la forme du volume tridimensionnel ainsi obtenu, dans différents espaces colorimétriques comme les espaces HSV, YCbCr (luminance, chrominance bleue, chrominance rouge), RGB, etc., est étudiée. La couleur de peau est alors décrite par une forme géométrique paramétrée : parallélépipède en RGB, cylindre elliptique en YCbCr, etc. L'ensemble de ces résultats est ensuite mis soit dans une table binaire qui spécifie si la couleur considérée est une couleur de peau ou non, soit dans une table entière où l'entier est proportionnel à la probabilité que le pixel a d'être de la peau ou pas. Cette table binaire ou entière est appelée première table colorimétrique.

Autrement dit, la détection de peau selon l'invention consiste à établir une ou plusieurs tables colorimétriques de couleurs de peau obtenues par apprentissage. Cette table colorimétrique peut être la plus réelle possible, c'est-à-dire que les couleurs considérées comme de la peau sont toutes les couleurs qui réellement peuvent être de la peau. La détection de la zone de peau sur l'image se fait alors uniquement par comparaison avec les éléments de cette table colorimétrique.

Dans un mode de réalisation préféré de l'invention, on choisit tout d'abord une table colorimétrique très restrictive, c'est-à-dire dont les éléments considérés comme de peau sont peu nombreux par rapport au nombre total d'éléments dans la table. En d'autres termes, les éléments de cette table très restrictive, dans le cas d'une table binaire, ont la valeur binaire 1 uniquement s'il n'y a aucun risque de confusion pour la couleur de cet élément ; dans une table très restrictive, toutes les couleurs pouvant être confondue avec de la peau (par exemple des couleurs très claires ou des couleurs très foncées) ont la valeur binaire 0. Le nombre de pixels détectés avec une table très restrictive est donc inférieur au nombre de pixels détectés avec une table peu restrictive. Ainsi, dans cette variante, la détection des pixels de peau est très stricte. Elle est ensuite complétée par accroissement de la région de peau détectée. Le critère d'accroissement est basé sur une autre table de couleurs de peau peu restrictive, c'est-à-dire dans laquelle il y a plus d'éléments considérés comme de la peau que comme de la non-peau. Ce mode de réalisation permet de déterminer les pixels qui ne peuvent être que de la peau et d'agrandir la zone des pixels détectés par les pixels voisins ayant une couleur proche des pixels détectés pour trouver la totalité de la zone de peau de l'image.

Dans l'algorithme décrit ci-dessus, l'ensemble des tables peut être avantageusement remplacé par une unique table d'entiers (non binaire) où chaque couleur a une certaine probabilité d'être une couleur de peau ou pas.

Quel que soit le mode de réalisation choisi pour détecter la zone de peau, on réalise ensuite, à partir de cette zone de peau, un masque de peau. Pour cela, on effectue un traitement morphologique sur la zone de peau. Ce traitement morphologique peut être une fermeture de l'image de la zone de peau détectée suivie d'une ouverture. Ce traitement par fermeture et ouverture morphologiques permet d'unifier la zone de peau en retirant des éventuels trous dans la zone de peau détectée, c'est-à-dire les zones de petites tailles situées dans la zone de peau mais non détectées comme de la peau. Par exemple, ce traitement morphologique permet de reboucher les zones correspondant au bruit dans l'image, à des grains de beauté et à des yeux, mais pas à une bouche. Ces opérations ont pour but de restreindre les zones de recherche des yeux : on veut inclure dans les zones de peau les yeux, afin de les rechercher dans une zone plus restreinte et de les détecter plus facilement.

Dans une variante de l'invention, on cherche à détecter des trous dans la zone de peau détectée. Une fois la zone de peau détectée, deux traitements morphologiques sont appliqués sur cette zone de peau :

■ une ouverture qui a pour conséquence d'ouvrir et d'élargir les zones de trou dans la peau, en particulier les trous des yeux ;

■ une fermeture qui a pour conséquence de refermer ces trous, en particulier les yeux.

Ces deux images sont ensuite soustraites l'une de l'autre pour obtenir une image des trous dans la peau. Cette image constitue un masque dans lequel les yeux, et les yeux rouges en particulier, sont inclus.

Une fermeture morphologique est un ensemble d'opérations morphologiques qui permet d'inclure, dans la zone de peau, des éléments détectés comme de la non-peau, par exemple les yeux. Une fermeture comporte une dilatation suivie d'une érosion de la zone de peau considérée. Une dilatation est une opération morphologique lors de laquelle on assigne à un pixel donné la valeur maximale des pixels de son voisinage, en ne considérant qu'un certain voisinage ayant une forme particulière et appelé « élément structurant ». Une érosion est une opération morphologique qui assigne à un pixel donné la valeur minimale des pixels de son voisinage, voisinage étant entendu dans le sens précédemment défini d'élément structurant voisin. Par exemple, si l'on prend un élément structurant carré, le voisinage sera ce carré centré au pixel courant. Autrement dit, la dilatation permet d'agrandir l'objet en déplaçant les frontières vers l'extérieur de l'objet et en remplissant les trous, et l'érosion réduit l'objet en déplaçant les frontières vers l'intérieur de l'objet et en élargissant les trous.

La fermeture morphologique aura donc pour conséquence de regrouper les pixels voisins au sens de l'élément structurant, et ainsi de fermer les trous de la zone.

L'ouverture morphologique consiste à faire une érosion de l'objet suivie d'une dilatation. Elle permet de supprimer les bruits dans la zone considérée et de creuser les trous.

Dans le procédé de l'invention, la zone obtenue après fermeture et ouverture est appelée masque de peau (étape 20 sur la figure 2). Dans l'exemple de la figure 1, le masque de peau est référencé 3. Ce masque de peau 3 est un rectangle d'inertie englobant une partie de la tête du personnage, en particulier la zone de peau 2. On connaît ainsi la taille approximative de la tête et son inclinaison. Ce masque de peau 3 inclut les yeux 4 du personnage et exclut la bouche 7 de ce personnage.

Les étapes suivantes du procédé de l'invention sont réalisées à partir de ce masque de peau 3. le procédé consiste à rechercher, dans le masque de peau 3, la présence éventuelle d'un oeil rouge 4 (étape 30 de la figure 2). Cet oeil rouge 4 est caractérisé, selon l'invention, par une zone rouge 5 et une zone de blanc d'oeil 6. La détection de l'oeil est faite, dans l'invention, en détectant d'une part une zone de rouge et d'autre part une zone de blanc d'oeil. La détection du rouge et la détection du blanc d'oeil peuvent être réalisées dans un sens ou dans l'autre, c'est-à-dire d'abord la détection du rouge et ensuite la détection du blanc d'oeil ou d'abord la détection du blanc d'oeil et ensuite la détection du rouge.

Dans un premier mode de réalisation de l'invention, on choisit de détecter d'abord le blanc d'oeil puis le rouge de l'oeil. Pour détecter le blanc d'oeil 6 dans le masque de peau 3, le procédé de l'invention propose de construire une seconde table colorimétrique, de type binaire ou entier, dont l'élément discriminant est la couleur du blanc d'oeil. Cette seconde table colorimétrique contient donc un certain nombre de couleurs possibles pour un blanc d'oeil.

Cette table des blancs d'oeil peut être réalisée par un apprentissage des différents blancs d'oeil, de façon identique à la réalisation de la table des couleurs de peau. Le blanc d'oeil est alors détecté en comparant chaque pixel du masque de peau avec les couleurs de blanc d'oeil mémorisées dans la table colorimétrique des blanc oeil.

Dans une variante de l'invention, la table colorimétrique des blancs d'oeil est réalisée au moyen d'un modèle algébrique établi sur un triplet RGB de l'espace colorimétrique RGB. Par exemple, ce modèle algébrique peut porter sur les valeurs des composantes du triplet, qui doivent être comprises entre deux seuils. Par exemple, ce modèle peut comporter une valeur R - G comprise entre deux seuils prédéfinis, une valeur G - B comprise entre deux autres seuils prédéfinis et une valeur B - R comprise entre encore deux autres seuils prédéfinis. Lorsque le pixel rencontré dans le masque de peau a des valeurs de RGB comprises entre les seuils prédéfinis, alors ce pixel est considéré comme étant du blanc d'oeil. Un autre critère du modèle algébrique peut être, par exemple, $G \approx B \approx R - 20$. Quel que soit le modèle algébrique choisi, plusieurs critères peuvent être associés, dans cette variante, et pris en considération en utilisant, entre les critères, un ET logique.

Dans cette variante, une table colorimétrique est utilisée lorsque les calculs à faire sont nombreux ou coûteux en temps. Cette table peut être constituée en discrétisant les niveaux de couleur et en testant si chaque couleur (discrétisée) est du blanc dans le modèle ou pas. Si oui, un 1 est mis dans la table, si non un 0.

Un modèle algébrique établi sur un triplet RGB peut aussi être mis en oeuvre lorsque le nombre de calculs est relativement peu important. Dans ce cas, le modèle est établi sur les différences entre les niveaux de couleur en RGB.

Dans une autre variante de l'invention, la table colorimétrique des blancs d'oeil est réalisée manuellement, de manière empirique. Pour cela, la table colorimétrique est construite au moyen de blancs d'oeil détectés manuellement sur différentes images et enregistrés dans la table colorimétrique. La table colorimétrique est, dans cette variante, construite à partir d'un cube discrétisé dans lequel ont été placés tous les échantillons de blanc d'oeil recueillis manuellement. La table peut être, par exemple, une table de 16X16X16 éléments, c'est-à-dire couleurs de blancs d'oeil, dans le cas d'une image à 256 niveaux de gris, réalisée à partir d'environ 300 échantillons de blanc d'oeil. Cette table peut être affinée en utilisant les mêmes techniques d'apprentissage que décrites précédemment, en rajoutant des couleurs qui ne sont pas du blanc d'oeil.

Comme pour la couleur de peau, la comparaison des pixels par rapport à une couleur de blanc d'oeil contenue dans la table colorimétrique peut être réalisée pixel par pixel. Il est également possible de sous-échantilloner la table colorimétrique, ce qui permet de réduire la place mémoire nécessaire à son stockage. Pour déterminer si une couleur correspond ou non à du blanc du modèle déterminé, il faut étudier la table discrétisée. Le pixel va être classé comme du blanc ou non suivant sa position par rapport au maillage de la table discrétisée. Si la couleur considérée est référencée dans la table (c'est à dire que la couleur se trouve sur un sommet du maillage), alors la valeur de la table est prise. Si la couleur se trouve sur une arête du maillage de l'espace colorimétrique choisi, alors on regarde la moyenne entre les deux points de l'arête. Si la couleur est au milieu d'une face du maillage, on regarde la moyenne entre les 4 sommets de la face. Si la couleur est à l'intérieur d'un cube du maillage, on calcule la moyenne entre les 8 sommets du cube considéré de l'espace colorimétrique. Si les moyennes ainsi calculées sont supérieures à une valeur prédéfinie, par exemple 0.5, on considère que la couleur est du blanc d'oeil ; dans le cas contraire, la couleur est considérée comme n'étant pas du blanc d'oeil. Selon le procédé de l'invention, lorsque le blanc d'oeil 6 a été détecté dans le masque de peau 3 de l'image 1 (étape 31 de la figure 2), on effectue la détection des zones de rouge 5 dans ce même masque de peau 3 (étape 32 de la figure 2). Selon l'invention, les zones de rouge correspondent à la pupille rouge de l'oeil. On considère donc que les zones de rouge sont au voisinage des zones de blanc d'oeil.

La détection d'une zone de rouge peut se faire soit par apprentissage avec réalisation d'une troisième table colorimétrique des rouges d'oeil, soit au moyen d'un critère algébrique. Dans le cas d'une table réalisée par apprentissage du rouge de l'oeil, l'apprentissage peut être réalisée de la même façon que pour la couleur de peau et le blanc d'oeil. Plus précisément, soit le rouge de l'oeil est appris selon une méthode classique d'apprentissage, soit la table colorimétrique est réalisée de manière empirique au moyen d'un certain nombres d'échantillons de rouge oeil. Comme pour la couleur de peau, les zones de rouge oeil peuvent être détectés, d'abord, au moyen d'une table des rouges très restrictive, puis complétées par accroissement au moyen d'une table colorimétrique des rouges moins restrictive. Comme les première et deuxième tables, cette troisième table peut être une table binaire ou une table d'entiers.

Dans une variante, les zones de rouge d'oeil peuvent être détectée au moyen d'un modèle algébrique portant sur la couleur du pixel considéré : un modèle algébrique en RGB peut être du type

$$\alpha{}^{*}R + \beta{}^{*}G + \gamma {}^{*} B >= Seuil$$

où $\alpha$, $\beta$, $\gamma$ et Seuil sont des coefficients réels, par exemple, dans l'invention, $\alpha =1$, $\beta=-1$, $\gamma=0$ et Seuil = 50.

Dans le cas de la détection du rouge de l'oeil dans les trous de la peau, une condition peut être ajoutée afin de limiter les zones de trou de peau possibles. Cette condition est la suivante : les zones de rouge dans un trou de peau associées à des yeux sont compactes, ne comportent pas de trou à l'intérieur. Un détecteur de compacité du trou de la peau permet donc d'invalider les trous de peau qui ne correspondent pas à des yeux.

La détection d'un oeil rouge (étape 30) peut comporter également une opération de reconnaissance de la forme de l'oeil (étape 34). En effet, la pupille de l'oeil, c'est-à-dire la zone rouge de l'oeil, est ronde ou sensiblement ronde. En d'autres termes, on peut utiliser, comme critère de détection de l'oeil rouge, le fait que la zone rouge détectée doit être sensiblement ronde et, plus précisément, avoir la forme d'une ellipse peu aplatie, ce qui correspond à la forme de la pupille lorsque la paupière recouvre le haut de la pupille. Par exemple, on peut choisir une ellipse avec un rapport de 7/10 pour la partie aplatie.

- La détection de la forme de la pupille de l'oeil peut comporter un ou plusieurs des tests suivants, pour chaque oeil rouge détecté : Le rectangle horizontal circonscrit à la zone rouge détectée a un allongement proche de 1 (supérieur à 0,7, mentionné ci-dessus) ;Le rectangle à 45° circonscrit à la zone rouge détectée a un allongement proche de 1 ( supérieur à 0,7, mentionné ci-dessus) ;

- Le taux de remplissage de la zone rouge d'intersection entre les deux rectangles, par rapport à l'ellipse incluse dans le rectangle circonscrit à la zone rouge détectée, est suffisamment élevé, par exemple, supérieur à 0,6 ;

- La surface de la zone rouge détecté est supérieure à une certaine proportion de la surface du visage ;

- La surface de la zone rouge détectée est inférieure à une certaine proportion de la surface du visage ;

- Dans le cas de la détection des yeux dans le trou de la peau, on vérifie que la surface de l'oeil détecté n'est pas trop grande, le trou de la peau étant beaucoup plus large que l'iris.

- Dans le cas de la détection des yeux dans les trous de la peau, on vérifie que la zone rouge détectée ne touche pas le trou de la peau, la zone de trou de peau étant plus large que l'oeil et donc ne touchant pas le bord de la pupille.

- La surface de la zone rouge détecté est supérieure à un certain nombre N de pixels.

Ces tests permettent, par exemple, de s'assurer que la bouche n'a pas été détectée comme étant un rouge d'oeil. En effet, la bouche ne répond pas à ces tests, car elle est trop grande, trop aplatie par rapport à un rouge d'oeil et elle n'a pas de blanc d'oeil autour de la zone rouge.

Dans un autre mode de réalisation de l'invention, la détection d'un oeil rouge dans le masque de peau (étape 30) consiste à détecter une zone de rouge avant une zone de blanc d'oeil. Les méthodes pour détecter le rouge d'oeil et le blanc d'oeil sont identiques à celles décrites précédemment, seul l'ordre de réalisation diffère.

Dans ce mode de réalisation de l'invention, un test supplémentaire peut être appliqué pour s'assurer que la zone rouge détectée correspond bien à la pupille de l'oeil. Ce test consiste, lorsque la zone de rouge d'oeil a été détectée, à vérifier si la zone entre le rouge d'oeil et le blanc d'oeil est bien l'iris de l'oeil. Pour cela, on considère que l'iris de l'oeil est une zone de couleur sensiblement constante. Pour cela, on part de la zone de rouge détectée et on étend cette zone tout autour de la zone détectée jusqu'à la zone de blanc d'oeil. Une fois que le blanc d'oeil est détecté, on regarde si la zone entre le rouge d'oeil et le blanc d'oeil est une teinte sensiblement constante. Si c'est le cas, on considère qu'il s'agit de l'iris de l'oeil. Dans ce mode de réalisation, le blanc d'oeil est cherché uniquement à l'extérieur de la zone rouge ce qui permet de ne pas détecter d'éventuels reflets sur la pupille rouge de l'oeil.

Sur la figure 2, cette variante (étape 33) a été représentée en pointillés pour montrer qu'elle peut être réalisée à un moment différent dans l'ordre de réalisation des étapes du procédé de l'invention, ou bien ne pas être effectuée du tout. En particulier, elle peut être réalisée avant la détection du blanc d'oeil et après la détection du rouge de l'oeil.

Le procédé de l'invention propose, en outre, lorsqu'un oeil rouge a été détecté, de corriger la couleur rouge de cet oeil (étape 40 de la figure 2). Cette correction a pour but d'apporter à l'oeil une apparence plus naturelle. Autrement dit, la correction de la couleur de l'oeil a pour but de retirer la couleur rouge à l'oeil et de la remplacer par une couleur plus naturelle pour l'oeil. Pour cela, le procédé de l'invention propose d'achromatiser et d'assombrir les pixels appartenant à la zone rouge détectée, tout en gardant l'ensemble des reflets, ce qui permet de conserver une impression de volume.

L'achromatisation consiste à transformer le triplet RGB de chaque pixel de la zone de rouge en des niveaux de gris. En d'autres termes, on transforme les pixels à traiter de l'espace colorimétrique RGB vers l'espace colorimétrique YCrCb, dans lequel Y est la luminance, Cr la chrominance rouge et Cb la chrominance bleue. Dans cet espace YCrCb, la chrominance Cr et la chrominance Cb de l'oeil sont mis à 0 ; la luminance Y est assombrie. Cet assombrissement de la luminance est réalisé en appliquant la fonction

$$Ynouv = Ymax. * (Y / Ymax. )^{1+\alpha}$$

où Ynouv est la nouvelle luminance, Ymax. est la luminance maximum possible, Y est la luminance initiale du pixel et $\alpha$ est un coefficient positif. On peut choisir, par exemple, $\alpha = 0.4$ ou $\alpha = 0.8$ pour une correction plus foncée.

Une autre méthode de correction consiste, dans l'espace colorimétrique RGB, à ignorer l'information de couleur R tout en gardant l'information de couleur G et B. Autrement dit, l'oeil rouge détecté est corrigé par récupération des informations non modifiées par l'effet des yeux rouges (c'est-à-dire les composantes de couleurs verte et bleue). Le pixel corrigé est alors très naturel, et sa nouvelle couleur peut être :

$$Rnouv = (G + B) /2$$

$$Gnouv = G$$

$$Bnouv = B,$$

Ou bien :

$$Rnouv = (G+B)/2$$

$$Gnouv = (G+B)/2$$

$$Bnouv = (G+B)/2$$

où Rnouv, Gnouv et Bnouv sont les nouvelles composantes du triplet RGB. La couleur d'oeil ainsi obtenue est très naturelle étant donné qu'il apparaît que la seule composante dégradée est le rouge, l'information du vert et du bleu étant à peu près bonnes.

Ainsi, le procédé de l'invention transforme ainsi, en noir et blanc, le rouge de la pupille et assombrit tous les pixels sauf les pixels ayant une luminance maximale correspondant à un reflet et donnant le volume de l'oeil.

Selon une variante de l'invention, la correction de la couleur d'oeil peut comporter un lissage, par exemple un lissage par moyenne réalisé par une diffusion par équation de la chaleur dans le voisinage de l'oeil corrigé. Ce lissage permet d'obtenir une correction naturelle de la couleur de la pupille.

Un autre lissage est envisageable, qui consiste à moyenner, à partir d'une certaine distance du centre de l'oeil, la couleur originale et la couleur corrigée et ce, avec une fonction affine de la distance au centre de l'oeil.

Ces deux méthode permettent d'effacer le halo rougeâtre autour de l'oeil corrigé, lié souvent à l'artéfact jpeg ou à la précision du capteur de prise de vue qui disperse spacialement les couleurs.

## Revendications

1. Procédé de détection d'un oeil rouge (4) sur une image (1), comportant les opérations suivantes :

   - détection (10) d'une zone de peau (2) sur l'image et, à partir de cette zone de peau, réalisation (20) d'un masque de peau (3) contenant ladite zone de peau,
   - détection (30), dans ce masque de peau, de l'oeil rouge par :

     détection (32, 21) d'une zone de rouge correspondant à la pupille (5) de l'oeil et d'une zone de blanc correspondant au blanc (6) de l'oeil, et **caractérisé par** détermination d'un ratio entre une aire de l'oeil détecté et une aire de la zone de peau détectée par rapport à une valeur seuil choisie.

2. Procédé selon la revendication 1, **caractérisé en ce que** le masque de peau (3) couvre un trou dans la zone de peau (2) détectée.

3. Procédé selon la revendication 1 ou 2, **caractérisé en ce que** la détection de l'oeil dans le masque (3) est réalisée par comparaison d'une couleur de chaque pixel de l'image avec des couleurs de blanc et des couleurs de rouge mémorisées dans des tables colorimétriques.

4. Procédé selon la revendication 3, **caractérisé en ce que** les tables colorimétriques sont des tables binaires.

5. Procédé selon la revendication 3, **caractérisé en ce que** les tables colorimétriques sont des tables d'entiers où chaque entier représente une probabilité d'être une couleur de rouge ou de blanc d'oeil.

6. Procédé selon l'une quelconque des revendications 1 à 5, **caractérisé en ce qu'**une seconde table colorimétrique est obtenue par apprentissage des couleurs de blancs d'oeil.

7. Procédé selon l'une quelconque des revendications 1 à 5, **caractérisé en ce qu'**une seconde table colorimétrique est obtenue par détermination algébrique des couleurs de blancs d'oeil dans un espace colorimétrique RGB.

8. Procédé selon l'une quelconque des revendications 1 à 7, **caractérisé en ce qu'**une troisième table colorimétrique est obtenue par apprentissage des couleurs de rouge de l'oeil.

9. Procédé selon l'une quelconque des revendications 1 à 7, **caractérisé en ce qu'**une troisième table colorimétrique est obtenue par détermination algébrique des couleurs de rouge de l'oeil dans un espace colorimétrique RGB.

10. Procédé selon l'une quelconque des revendications 1 à 9, **caractérisé en ce que** la détection de l'oeil comporte une opération de reconnaissance d'une forme sensiblement ronde (34) de la pupille de l'oeil.

11. Procédé selon l'une quelconque des revendications 1 à 10, **caractérisé en ce que** la détection de l'oeil comporte une détection d'une couleur constante (33) entre la zone de rouge et la zone de blanc de l'oeil correspondant à l'iris de l'oeil.

12. Procédé selon l'une quelconque des revendications 1 à 11, **caractérisé en ce que** la détection de la zone de peau est réalisée par comparaison de chaque pixel de l'image avec des couleurs de peau mémorisées dans une première table colorimétrique.

13. Procédé selon la revendication 12, **caractérisé en ce que** la première table colorimétrique est une table binaire.

14. Procédé selon la revendication 12, **caractérisé en ce que** la première table colorimétrique est une table d'entiers caractérisant une probabilité d'une couleur d'être une couleur de peau.

15. Procédé selon l'une quelconque des revendications 12 à 14, **caractérisé en ce que** la première table colorimétrique est réalisée par apprentissage des couleurs de peau.

16. Procédé selon l'une quelconque des revendications 12 à 15, **caractérisé en ce que** la détection de la zone de peau comporte un accroissement de la zone de peau par comparaison avec une quatrième table colorimétrique, cette quatrième table comportant un nombre de couleurs de peau plus grand que la troisième table.

17. Procédé selon l'une quelconque des revendications 12 à 16, **caractérisé en ce que** la zone de peau détectée est traitée par opérations morphologiques, pour former un masque de peau.

18. Procédé selon l'une quelconque des revendications 16 à 17, **caractérisé en ce que** la zone de peau détectée est traitée par opérations morphologiques, pour former un masque des trous de la peau.

**19.** Procédé selon l'une quelconque des revendications 1 à 18, **caractérisé en ce qu'**un oeil rouge détecté est corrigé (40) par achromatisation et assombrissement des pixels formant la zone de rouge de l'oeil.

**20.** Procédé selon l'une quelconque des revendications 1 à 18, **caractérisé en ce qu'**un oeil rouge détecté est corrigé (40) par récupération des informations non modifiées par l'effet des yeux rouges.

**21.** Procédé selon la revendication 19 ou 20, **caractérisé en ce que** la correction de l'oeil rouge comporte un lissage après dilatation des pixels de la zone de rouge.

**22.** Dispositif d'impression d'images numériques, **caractérisé en ce qu'**il met en oeuvre un procédé de détection d'oeil rouge selon l'une quelconque des revendications 1 à 21.

**Claims**

**1.** A method for detecting red-eye (4) on an image (1), including the following operations:

- detecting (10) a skin region (2) on the image, and from this skin region, performing (20) a skin mask (3) containing said skin region,
- detecting (30) in this skin mask, red-eye by:

detecting (32, 21) a red region corresponding to pupil (5) of the eye and a white region corresponding to the white (6) of the eye, and **characterised by** determining a ratio between an area of the detected eye and an area of the detected skin region, compared with a chosen threshold value.

**2.** A method according to claim 1, **characterised in that** skin mask (3) covers a hole in detected skin region (2).

**3.** A method according to claim 1 or 2, **characterised in that** the detection of the eye in mask (3) is performed by comparing a colour of each image pixel with the white and red colours memorised in colourimetric tables.

**4.** A method according to claim 3, **characterised in that** the colourimetric tables are binary tables.

**5.** A method according to claim 3, **characterised in that** the colourimetric tables are tables of integers where each integer represents a probability of being a red or white eye colour.

**6.** A method according to any one of claims 1 to 5, **characterised in that** a second colourimetric table is obtained by learning the white eye colours.

**7.** A method according to any one of claims 1 to 5, **characterised in that** a second colourimetric table is obtained by algebraic determination of the white eye colours in an RGB colourimetric space.

**8.** A method according to any one of claims 1 to 7, **characterised in that** a third colorimetric table is obtained by learning red eye colours.

**9.** A method according to any one of claims 1 to 7, **characterised in that** a third colorimetric table is obtained by algebraic determination of the red eye colours in an RGB colourimetric space.

**10.** A method according to any one of claims 1 to 9, **characterised in that** the detection of the eye includes an operation of recognising a noticeably round form (34) of the eye pupil.

**11.** A method according to any one of claims 1 to 10, **characterised in that** the detection of the eye includes detecting a constant colour (33) between the red region and the white region corresponding to the iris of the eye.

**12.** A method according to any one of claims 1 to 11, **characterised in that** detecting the skin region is performed by comparing each image pixel with skin colours memorised in a first colourimetric table.

**13.** A method according to claim 12, **characterised in that** the first colourimetric table is a binary table.

**14.** A method according to claim 12, **characterised in that** the first colourimetric table is a table of integers characterising a probability of a colour being a skin colour.

**15.** A method according to any one of claims 12 to 14, **characterised in that** the first colourimetric table is performed by learning skin colours.

**16.** A method according to any one of claims 12 to 15, **characterised in that** the detection of the skin region includes increasing the skin region by comparison with a fourth colourimetric table, this fourth table including a larger number of skin colours than the third table.

**17.** A method according to any one of claims 12 to 16, **characterised in that** the detected skin region is processed by morphological operations in order to form a skin mask.

**18.** A method according to any one of claims 16 to 17, **characterised in that** the detected skin region is processed by morphological operations in order to form a mask for the skin holes.

19. A method according to any one of claims 1 to 18, **characterised in that** a detected red-eye is corrected (40) by achromatisation and darkening of the pixels forming the red-eye region.

20. A method according to any one of claims 1 to 18, **characterised in that** a detected red-eye is corrected (40) by recovering information remaining unmodified by the red-eye effect.

21. A method according to claim 19 or 20, **characterised in that** the correction of the red-eye includes an anti-aliasing operation after dilatation of the pixels of the red region.

22. A device for printing digital images, **characterised in that** it implements a method for detecting red-eye according to any one of claims 1 to 21.

**Patentansprüche**

1. Verfahren zur Erkennung eines roten Auges (4) auf einem Bild (1) bestehend aus folgenden Operationen:

    - Erkennung (10) einer Hautzone (2) auf dem Bild und Erstellung (20) einer Hautmaske (3) mit der besagten Hautzone, ausgehend von dieser Hautzone,
    - Erkennung (30) des roten Auges in dieser Hautmaske durch:

        die Erkennung (32, 21) einer Rotzone, die der Pupille (5) des Auges entspricht und einer Weißzone, die dem Weiß des Auges entspricht und **gekennzeichnet durch** die Bestimmung eines Verhältnisses zwischen einer Fläche des erkannten Auges und einer Fläche der erkannten Hautzone im Verhältnis zu einem gewählten Grenzwert.

2. Verfahren nach Anspruch 1, **dadurch gekennzeichnet, dass** die Hautmaske (3) ein Loch in der erkannten Hautzone (2) abdeckt.

3. Verfahren nach Anspruch 1 oder 2, **dadurch gekennzeichnet, dass** die Erkennung des Auges in der Maske (3) durch den Vergleich einer Farbe eines jeden Bildpunktes im Bild mit den weißen Farben und roten Farben, die in den Farbtabellen abgespeichert sind, erfolgt.

4. Verfahren nach Anspruch 3, **dadurch gekenn-**

**zeichnet, dass** die Farbtabellen binäre Tabellen sind.

5. Verfahren nach Anspruch 3, **dadurch gekennzeichnet, dass** die Farbtabellen Tabellen mit Ganzzahlen sind, in der jede Ganzzahl eine Wahrscheinlichkeit darstellt, eine rote oder weiße Farbe des Auges zu sein.

6. Verfahren nach irgendeinem der Ansprüche 1 bis 5, **dadurch gekennzeichnet, dass** man durch Einlernen der weißen Farben des Auges eine zweite Farbtabelle erhält.

7. Verfahren nach irgendeinem der Ansprüche 1 bis 5, **dadurch gekennzeichnet, dass** man durch algebraische Bestimmung der weißen Farben des Auges in einem RGB-Farbraum eine zweite Farbtabelle erhält.

8. Verfahren nach irgendeinem der Ansprüche 1 bis 7, **dadurch gekennzeichnet, dass** man durch das Einlernen der roten Farben des Auges eine dritte Farbtabelle erhält.

9. Verfahren nach irgendeinem der Ansprüche 1 bis 7, **dadurch gekennzeichnet, dass** man durch algebraische Bestimmung der roten Farben des Auges in einem RGB-Farbraum eine dritte Farbtabelle erhält.

10. Verfahren nach irgendeinem der Ansprüche 1 bis 9, **dadurch gekennzeichnet, dass** die Erfassung des Auges eine Erkennungsoperation einer in etwa runden Form (34) der Augenpupille enthält.

11. Verfahren nach irgendeinem der Ansprüche 1 bis 10, **dadurch gekennzeichnet, dass** die Erfassung des Auges eine Erkennung einer konstanten Farbe (33) zwischen der Rotzone und der Weißzone des Auges enthält, die der Iris des Auges entspricht.

12. Verfahren nach irgendeinem der Ansprüche 1 bis 11, **dadurch gekennzeichnet, dass** die Erkennung der Hautzone durch den Vergleich jedes Bildpunktes im Bild mit den gespeicherten Hautfarben in einer ersten Farbtabelle erfolgt.

13. Verfahren nach Anspruch 12, **dadurch gekennzeichnet, dass** die erste Farbtabelle eine binäre Tabelle ist.

14. Verfahren nach Anspruch 12, **dadurch gekennzeichnet, dass** die erste Farbtabelle eine Tabelle mit Ganzzahlen ist, die eine Wahrscheinlichkeit dafür, dass eine Farbe eine Hautfarbe ist, kennzeichnet.

**15.** Verfahren nach irgendeinem der Ansprüche 12 bis 14, **dadurch gekennzeichnet, dass** die erste Farbtabelle durch das Einlernen der Hautfarben entsteht.

**16.** Verfahren nach irgendeinem der Ansprüche 12 bis 15, **dadurch gekennzeichnet, dass** die Erkennung der Hautzone eine Erweiterung der Hautzone durch den Vergleich mit einer vierten Farbtabelle enthält, wobei diese vierte Farbtabelle eine größere Zahl an Hautfarben enthält, als die dritte Tabelle.

**17.** Verfahren nach irgendeinem der Ansprüche 12 bis 16, **dadurch gekennzeichnet, dass** die erkannte Hautzone durch morphologische Vorgänge bearbeitet wird, um eine Hautmaske zu bilden.

**18.** Verfahren nach irgendeinem der Ansprüche 16 bis 17, **dadurch gekennzeichnet, dass** die erfasste Hautzone durch morphologische Vorgänge bearbeitet wird, um eine Maske mit den Hautlöchern zu bilden.

**19.** Verfahren nach irgendeinem der Ansprüche 1 bis 18, **dadurch gekennzeichnet, dass** ein erkanntes rotes Auge durch Achromatisierung und Verdunkelung jener Bildpunkte korrigiert (40) wird, die die Rotzone des Auges bilden.

**20.** Verfahren nach irgendeinem der Ansprüche 1 bis 18, **dadurch gekennzeichnet, dass** ein erkanntes rotes Auge durch die Rückgewinnung der Informationen korrigiert (40) wird, die durch den Effekt der roten Augen nicht verändert wurden.

**21.** Verfahren nach Anspruch 19 oder 20, **dadurch gekennzeichnet, dass** die Korrektur der roten Augen eine Glättung nach der Ausdehnung der Bildpunkte der Rotzone enthält.

**22.** Vorrichtung zum Ausdrucken von digitalen Bildern, **dadurch gekennzeichnet, dass** sie ein Verfahren zur Erkennung von roten Augen entsprechend irgendeinem der Ansprüche 1 bis 21 anwendet.

**Fig. 1**

- Détection zone de peau — 10
- Réalisation masque de peau — 20
- Détection blanc d'oeil — 31
- Détection rouge d'oeil — 32
- Détection iris oeil — 33
- Reconnaissance forme ronde de la pupille — 34
- 30
- Correction couleur pupille — 40

**Fig. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 040119851 A1
- CA 2460179

- EP 1394723 A